# EUROPÄISCHE PATENTANMELDUNG

(11) **EP 4 736 637 A2**
(43) Veröffentlichungstag der Anmeldung: **06.05.2026**
(21) Anmeldenummer: 26154594.1
(22) Anmeldetag: 06.03.2025
(51) Int. Cl.: A01K 1/02

(54) **ZUSAMMENKLAPPBARE TIERTRANSPORTBOX, INSBESONDERE FÜR DEN TRANSPORT VON HUNDEN IN KRAFTFAHRZEUGEN**

(30) Priorität: 08.03.2024 DE 102024106766
(62) Teilanmeldung aus: 25711423.1
(71) Anmelder: 1one1 GmbH, 8598 Bottighofen (CH)
(72) Erfinder: Boldt, Nikolai, 53567 Buchholz (DE); Varga, Mihaly Sandor, 1121 Budapest (HU)
(74) Vertreter: Freischem & Partner Patentanwälte mbB

(57) **Zusammenfassung**

Die Erfindung betrifft eine zusammenklappbare Tiertransportbox (10) mit einem Bodenelement (12), einem verschwenkbar mit dem Bodenelement (12) verbundenen ersten Rahmenelement (14) und einem verschwenkbar mit dem Bodenelement (12) verbundenen zweiten Rahmenelement (16), wobei das erste Rahmenelement (14) und das zweite Rahmenelement (16) auf gegenüberliegenden Seiten des Bodenelements (12) verschwenkbar angeordnet sind, wobei ferner ein mit dem ersten Rahmenelement (14) und mit dem zweiten Rahmenelement (16) aufspannbarer Bezug (18) vorgesehen ist, der sich durch Aufschwenken des ersten Rahmenelements (14) und des zweiten Rahmenelements (16) derart aufspannen lässt, dass sich zwischen den Rahmenelementen (14, 16) ein Hohlraum zur Aufnahme eines zu transportierenden Tieres ergibt. Dabei ist mindestens ein auf das erste Rahmenelement (14) und das zweite Rahmenelement (16) wirkendes Bedien-Spannmittel (20) vorgesehen, das gekoppelt an die Bedienung des ersten Rahmenelements (14) und/oder des zweiten Rahmenelements (16) eine Arretierung des ersten Rahmenelements (14) und des zweiten Rahmenelements (16) in einer aufgeschwenkten Spannposition bewirkt, wobei als Bedien-Spannmittel (20) ein an dem ersten Rahmenelement (14) und/oder an dem zweiten Rahmenelement (16) verschwenkbar angeordnetes Stützelement (22) vorgesehen ist, das beim Aufschwenken in eine sich zwischen dem ersten Rahmenelement (14) und dem zweiten Rahmenelement (16) erstreckende Stützposition verschwenkbar ist und wobei das Stützelement (22) in eine Richtung vorgespannt an dem ersten Rahmenelement (14) und/oder an dem zweiten Rahmenelement (16) angeordnet ist.

## Beschreibung

Die Erfindung betrifft eine zusammenklappbare Tiertransportbox, insbesondere für den Transport von Hunden in Kraftfahrzeugen.

Aus DE 10 2010 011 547 U1 und aus DE 20 2019 003 751 U1 sind klappbare Tiertransportboxen bekannt, die aus einem Grundrahmen mit Seitenwänden, Türen, Deckel sowie Front- und Rückwand aus Aluminiumprofilen bestehen und jeweils auch einen Boden aufweisen. Diese Tiertransportboxen sind im Inneren des Kofferraumes eines Kraftfahrzeuges auf- und zusammenklappbar. Für das Zusammenklappen der Tiertransportboxen werden die Frontwand und die Rückwand jeweils nach innen geschwenkt. Anschließend können die Seitenwände über ein etwa mittig angeordnetes Scharnier derart jeweils nach innen zusammengeklappt werden, dass der Deckel parallel zum Boden in Richtung des Bodens verfahren wird. Diese Tiertransportboxen sind aufgrund der massiven Bauweise mit vielen Metallprofilen relativ schwer und auch teuer in der Herstellung.

Aus DE 20 2011 003 019 U1 ist eine Hunde-Tiertransportbox mit nach innen einklappbarer Front mit Gittertüren und nach innen und nach außen klappbarer Rückwand bekannt. Ein Hauptrahmen, mit dem die Front und die Rückwand verbunden sind, ist selbst jedoch nicht klappbar gestaltet. Auch diese Tiertransportbox weist viele Metallprofile auf, ist relativ schwer und teuer in der Herstellung. Ferner benötigt diese aufgrund des nicht klappbarer Hauptrahmens auch im nicht genutzten Zustand sowie für Verkaufs- und Lagerzwecke viel Raum.

Aus WO 2021/084090 A1 ist eine Tiertransportbox zur Montage in einem Innenraum eines Fahrzeuges bekannt, die ein Gestänge mit einer Mehrzahl von Stangen und eine flexible Hülle umfasst, welche durch das Gestänge aufgespannt wird, so dass die Hülle zusammen mit dem Gestänge einen Hohlraum zur Aufnahme eines Tieres bilden. Dabei ist ein Rückhaltegurt vorgesehen, der sich zwischen zwei Stangen des Gestänges erstreckt und zum Sichern des in der Tiertransportbox zu transportierenden Tieres dienen soll. Die Tiertransportbox ist in Hochrichtung dadurch klappbar gestaltet, dass an den in Querrichtung verlaufenden Verbindungsstangen Gelenke vorgesehen sind, welche zum Zusammenklappen ein Hochklappen des Bodens durch nach oben Verschwenken der vorderen und hinteren unteren Querstange und ein Herunterklappen der oberen Querstange ein mittiges Zusammenfahren der linken und rechten Seitenwand ermöglichen. Nachteilig an diesem Faltmechanismus ist nicht nur, dass das Zusammenfalten der unteren Querstangen gegen die Schwerkraft erfolgen muss, sondern auch, dass die zusammengeklappte Box noch umgelegt oder aus dem Kofferraum eines Fahrzeuges entnommen werden muss.

Ausgehend von dem Stand der Technik liegt der Erfindung die Aufgabe zugrunde, eine zusammenklappbare Tiertransportbox zur Verfügung zu stellen, die einerseits ein relativ geringes Gewicht aufweist und andererseits eine komfortable Bedienung beim Auf- und Zusammenklappen ermöglicht.

Die Lösung der Aufgabe erfolgt erfindungsgemäß mit den Merkmalen des Anspruchs 1. Weitere praktische Ausführungsformen und Vorteile der Erfindung sind in Verbindung mit den abhängigen Ansprüchen beschrieben.

Eine erfindungsgemäße zusammenklappbare Tiertransportbox weist ein Bodenelement, ein verschwenkbar mit dem Bodenelement verbundenes erstes Rahmenelement und ein verschwenkbar mit dem Bodenelement verbundenes zweites Rahmenelement auf. Dabei sind das erste Rahmenelement und das zweite Rahmenelement auf gegenüberliegenden Seiten des Bodenelements verschwenkbar angeordnet. Ferner ist ein mit dem ersten Rahmenelement und mit dem zweiten Rahmenelement aufspannbarer Bezug vorgesehen, der sich durch Aufschwenken des ersten Rahmenelements und des zweiten Rahmenelements derart aufspannen lässt, dass sich zwischen den Rahmenelementen ein Hohlraum zur Aufnahme eines zu transportierenden Tieres ergibt. Außerdem ist mindestens ein auf das erste Rahmenelement und das zweite Rahmenelement wirkendes Bedien-Spannmittel vorgesehen, das - gekoppelt an die Bedienung des ersten Rahmenelements und/oder des zweiten Rahmenelements - eine Arretierung des ersten Rahmenelements und des zweiten Rahmenelements in einer aufgeschwenkten Spannposition bewirkt. Dabei sind Bedien-Spannmittel im Sinne der Erfindung jegliche Elemente, die geeignet sind, die erreichte Spannposition zu fixieren, indem das erste Rahmenelement und das zweite Rahmenelement in der aufgeschwenkten Spannposition automatisch arretiert werden. Dies kann insbesondere durch separate Arretierung des ersten Rahmenelements und des zweiten Rahmenelements in der jeweiligen Soll-Position für die aufgeschwenkte Spannposition realisiert sein. Alternativ können auch ein weiteres Element oder weitere Elemente eingesetzt werden, um die Arretierung zu bewirken. Das Erfindungskonzept zielt dabei auf eine Koppelung des Bedien-Spannmittels an die Bedienung ab, d.h. es soll ausreichend sein, das erste Rahmenelement und/oder das zweite Rahmenelement in die jeweilige aufgeschwenkte Spannposition zu verschwenken, um die gewünschte Arretierung zu bewirken. Dadurch ergibt sich eine besonders einfache und komfortable Bedienung. Vorzugsweise ist das Bedien-Spannmittel sogar so konstruiert, dass sich die Tiertransportbox mit nur einer Hand aufbauen lässt. Das Risiko einer Fehlbedienung beim Aufbauen der Tiertransportbox ist dann auch nahezu ausgeschlossen, weil es ausreicht, das erste Rahmenelement und das zweite Rahmenelement aufzuschwenken und am Ende des Aufschwenkvorgangs eine automatische Arretierung erfolgt.

Da sich erfindungsgemäße Tiertransportboxen besonders einfach und komfortabel auf- und zusammenklappen lassen, eignen sich diese dazu, sowohl in Lager- als auch auf Verkaufsflächen überwiegend in der zusammengeklappten Form aufbewahrt zu werden. Denn ein bedarfsweises Aufbauen kann bei Kaufinteresse eines Kunden in Sekundenschnelle erfolgen, insbesondere auch einhändig. Dementsprechend wird für Verkaufs- und Lagerzwecke nur wenig Raum benötigt.

In einer praktischen Ausführungsform einer erfindungsgemäßen Tiertransportbox ist als Bedien-Spannmittel ein an dem ersten Rahmenelement und/oder an dem zweiten Rahmenelement verschwenkbar angeordnetes Stützelement vorgesehen, das beim Aufschwenken in eine sich - insbesondere oberseitig - zwischen dem ersten Rahmenelement und dem zweiten Rahmenelement erstreckende Stützposition verschwenkbar ist. Unter einem solchen Stützelement ist insbesondere ein Element zu verstehen, das sich in der Stützposition auf der dem Bodenelement gegenüberliegenden Oberseite zwischen dem ersten Rahmenelement und dem zweiten Rahmenelement erstreckt. So kann mit dem Bodenelement, dem ersten Rahmenelement, dem zweiten Rahmenelement und dem Stützelement ein in der Seitenansicht viereckiger Rahmen gebildet werden, welcher den Hohlraum für ein zu transportierendes Tier umschließt. Die beiden verbleibenden Seitenwände können insbesondere gewichtssparend nur oder überwiegend mit dem Bezug verschlossen sein.

Wenn an dem ersten Rahmenelement ein verschwenkbares Stützelement angeordnet ist und an dem zweiten Rahmenelement ein Widerlagerabschnitt für das Stützelement angeordnet ist, kann die Bedienung einer erfindungsgemäßen Tiertransportbox weiter vereinfacht werden. Alternativ kann umgekehrt an dem zweiten Rahmenelement ein verschwenkbares Stützelement angeordnet sein und an dem ersten Rahmenelement ein Widerlagerabschnitt für das Stützelement angeordnet sein.

Ein besonders bevorzugter Widerlagerabschnitt weist einen Führungs- und/oder einen Spannbereich auf. Unter einem Führungsbereich wird ein Bereich verstanden, in welchem das Stützelement von zwei oder mehr Elementen zwangsweise geführt wird. Unter einem Spannbereich wird insbesondere ein einseitiger - beispielsweise als Platte ausgeführter - Widerlagerabschnitt verstanden, der so ausgebildet ist, dass er mit Hilfe des Widerlagerabschnitts in einem Verfahrweg der Aufschwenkbewegung, vorzugsweise am Ende des Verfahrweges der Aufschwenkbewegung, zu einem Endbereich derart verjüngt, dass das erste Rahmenelement und das zweite Rahmenelement mit Hilfe des Stützelements und dem Widerlagerabschnitt in ihrer aufgespannten Position aufgespreizt werden.

Gewichtstechnisch vorteilhaft und auch einfach zu bedienen ist eine erfindungsgemäße Tiertransportbox in einer weiteren praktischen Ausführungsform, wenn zum Aufschwenken des ersten Rahmenelements und/oder des zweiten Rahmenelements ein Zugmittel vorgesehen ist, das unmittelbar oder mittelbar mit dem ersten Rahmenelement oder mit dem zweiten Rahmenelement verbunden ist. Unter einem solchen Zugmittel wird insbesondere ein Spannseil, ein Spanngurt, eine Kette oder ein sonstiges Band verstanden, das so angeordnet ist, dass es zum Aufschwenken lediglich gezogen werden muss.

In einer weiteren praktischen Ausführungsform ist das Zugmittel an einem verschwenkbaren Stützelement derart angeordnet, dass das Stützelement durch einfaches Ziehen an dem Zugmittel in eine sich zwischen dem ersten Rahmenelement und dem zweiten Rahmenelement erstreckende Stützposition bewegbar ist. Vorzugsweise ist das Zugmittel an der der Schwenkachse gegenüberliegenden Seite des Stützelements angeordnet. In diesem Fall können abhängig von der Zugrichtung und der Relativposition zwischen dem Stützelement und dem damit verschwenkbar verbundenen Rahmenelement sowohl das Rahmenelement als auch das Stützelement angetrieben werden.

Vorzugsweise ist das Stützelement als u-förmiger Bügel, als Platte oder als Gitter ausgebildet. Eine solche Struktur kann mit besonders geringem Gewicht realisiert und in seiner Dimensionierung relativ einfach an den jeweiligen Anwendungsfall angepasst werden. Dazu wird bei Platten eine geeignete Kombination aus Material und Materialstärke gewählt. Bei einem u-förmigen Bügel oder einem Gitter kann durch die Dimensionierung der Elementstärke, der Abstände der Gitterstäbe und Auswahl des Materials ebenfalls eine geeignete Auslegung erfolgen.

Alternativ oder in Ergänzung dazu sind das Stützelement und das damit verbundene Rahmenelement vom Bezug entkoppelt. Dadurch lassen sich sowohl das Stützelement als auch das damit verbundene Rahmenelement unabhängig von dem Bezug bewegen, wodurch sich das Aufklappen und Zusammenklappen der erfindungsgemäßen Tiertransportbox konstruktiv besonders einfach realisieren lässt.

In einer weiteren praktischen Ausführungsform einer erfindungsgemäßen Tiertransportbox mit zusätzlichem Stützelement ist das Stützelement in eine Richtung vorgespannt an dem ersten Rahmenelement und/oder an dem zweiten Rahmenelement angeordnet. In diesem Fall kann die Bedienung beim Aufklappen und/oder beim Zuklappen mit Hilfe der Vorspannung unterstützt und damit erleichtert werden.

Beispielsweise kann das Stützelement mit Hilfe (mindestens) einer geeigneten Feder in eine Richtung vorgespannt werden, in welche es relativ zu dem ersten Rahmenelement oder dem zweiten Rahmenelement (gemeint ist dasjenige Rahmenelement, an welchem das Stützelement verschwenkbar angeordnet ist) verschwenkt werden soll, um die Tiertransportbox zusammenzuklappen. In diesem Fall kann der Zusammenklappvorgang auf besonders einfache Art und Weise realisiert werden, indem das Stützelement aus der Stützposition heraus bewegt wird. Eine solche Bewegung aus der Stützposition kann insbesondere unter Ausnutzung der Schwerkraft erfolgen, indem das Bedien-Spannmittel gelöst wird.

Das Stützelement kann auch in die andere Richtung vorgespannt werden, wenn mit einer Vorspannkraft die Relativposition des Stützelements zu dem korrespondierenden Rahmenelement beim Aufklappen der Tiertransportbox unterstützt bzw. automatisch mit Hilfe der Vorspannkraft erreicht werden soll, sofern keine mindestens gleich große Gegenkraft oder ein mindestens gleich großes Gegenmoment wirkt.

In einer anderen Ausführungsform einer Tiertransportbox ist als Bedien-Spannmittel eine - insbesondere vorgespannte - Gelenkarretierung im verschwenkbar ausgebildeten Bereich sowohl zwischen dem ersten Rahmenelement und dem Bodenelement als auch zwischen dem zweiten Rahmenelement und dem Bodenelement vorgesehen, mittels welcher das erste Rahmenelement und das zweite Rahmenelement jeweils in der aufgespannten Position automatisch arretiert werden, sobald die Spannposition beim Aufschwenken erreicht ist. Dies kann beispielsweise durch das Zusammenwirken eines mit einer Feder vorgespannten Bolzens in eine Bolzenaufnahme realisiert sein. Alternativ kann auch eine Kinematik ausgebildet sein, welche die Aufklappbewegung des ersten Spannelements und/oder des zweiten Spannelements nutzt, um bei Erreichen der aufgespannten Position eine Arretierung zu aktivieren. Zum Zusammenklappen der Tiertransportbox muss dann ein manuelles Lösen der Arretierung erfolgen, insbesondere indem der eine Sperrbolzen oder mehrere Sperrbolzen gegen die Federkraft gelöst werden und/oder indem eine mittels einer Kinematik bewirkte Verriegelung wieder gelöst wird, um den Zusammenklappvorgang dann starten zu können. Im Falle einer Gelenkarretierung kann die Tiertransportbox mit besonders geringem Gewicht realisiert werden, da dann nur das Bodenelement, das erste Rahmenelement und das zweite Rahmenelement mit der jeweiligen Gelenkarretierung benötigt werden, während die restlichen Flächen, insbesondere die Dachfläche und zwei Seitenflächen nur von dem Bezug umspannt sein können.

Wenn in dem ersten Rahmenelement und/oder in dem zweiten Rahmenelement mindestens eine verschwenkbare Tür angeordnet und/oder an dem Bezug mindestens eine bedarfsweise betätigbare Öffnung ausgebildet ist, kann die aufgeklappte Box auch in einem Kofferraum eines Kraftfahrzeuges stehend leicht geöffnet und wieder geschlossen werden, um ein Tier in die Box hinein oder wieder herauszulassen. Vorzugsweise ist mindestens eine verschwenkbare Tür als Standardöffnung vorgesehen und eine weitere Öffnung als Notöffnung an einer benachbarten Seite vorgesehen, um bei einem Unfall und daraus resultierender eingeklemmter Standardöffnung das Tier noch über die weitere Öffnung möglichst schnell aus der Tiertransportbox befreien zu können.

Um eine erfindungsgemäße Tiertransportbox komfortabel, robust und zugleich mit langanhaltender Qualität betreffend das Aufklappen und Zusammenklappen zu versehen, ist zur Verschwenkbarkeit des ersten Rahmenelements und/oder zur Verschwenkbarkeit des zweiten Rahmenelements als Scharnier mindestens ein Bolzen in einer kreisbogenförmigen korrespondierenden Nut verfahrbar gelagert, wobei der mindestens eine Bolzen und die mindestens eine Nut unmittelbar an dem Bodenelement und dem ersten Rahmenelement bzw. unmittelbar an dem Bodenelement und dem zweiten Rahmenelement ausgebildet sind.

Vorzugsweise sind zwei gegenüberliegend angeordnete Bolzen und zwei korrespondierende kreisbogenförmige Nuten je Scharnier vorgesehen. Dadurch ergibt sich eine besonders robuste Gestaltung mit jeweils auf die Bolzen nur reduzierten Kräften, wenn dieser als Anschlag genutzt wird.

In diesem Fall ist für die Funktion der Verschwenkbarkeit eine direkte Verbindung zwischen dem Bodenelement und dem daran verschwenkbar gelagerten Rahmenelement vorgesehen. Diese kann über die Wahl eines geeigneten Abstandes des mindestens einen Bolzens zur Drehachse besonders robust gestaltet werden. Vorzugsweise ist der Bolzen mindestens 2 cm, weiter bevorzugt mindestens 3 cm und besonders bevorzugt mindestens 5 cm von der Schwenkachse versetzt angeordnet. So können die auf den Bolzen wirkenden Kräfte bei Erreichen des jeweiligen Anschlages reduziert und die Dauerhaltbarkeit der Tiertransportbox insbesondere bezüglich des Auf- und Zusammenklappens auf ein hohes Niveau gebracht werden.

Wie schon erwähnt, kann bei einer Tiertransportbox mit einem Zugmittel als Zugmittel ein Gurt vorgesehen sein. Diese weisen den Vorteil auf, dass sie sehr flach ausgebildet sein können und insoweit zumindest in einer Dimension einen nur geringen Bauraum benötigen, um durch andere Elemente hindurchgeführt werden zu können. Auch lässt sich durch eine Vergrößerung der Breite der resultierende Druck auf andere Elemente gut auslegen.

In einer praktischen Ausführungsform einer erfindungsgemäßen Tiertransportbox ist das Zugmittel durch ein Zugmittel-Fixierelement geführt, mittels welchem eine Fixierwirkung auf das Zugmittel ausübbar ist. Unter einem solchen Zugmittel-Fixierelement wird insbesondere ein Spannschloss verstanden, das es ermöglicht, das Zugmittel in einer bestimmten Position und Spannungslage zu fixieren. Solche Spannschlösser werden beispielsweise in Verbindung mit Spannbändern zur Sicherung von Ladung verwendet.

Weiter bevorzugt ist es, wenn das Zugmittel-Fixierelement mit einer Vorspannung derart beaufschlagt ist, dass die Fixierwirkung aufgrund der Vorspannung ohne das Erfordernis einer separaten Betätigung ausgeübt wird. Eine solche Vorspannung kann insbesondere mittels einer geeigneten Feder erzeugt werden, die derart auf einen Sperrriegel wirkt, dass dieser, der insbesondere Teil eines Zugmittel-Fixierelements ist, einer Rückbewegung des Zugmittels entgegenwirkt. So kann beispielsweise der Sperrriegel eines Spannschlosses federbeaufschlagt sein, um ein in Zugrichtung durch das Zugmittel-Fixierelement geführtes Zugmittel stets auf dem durch Zug erzeugten Spannungsniveau zu halten.

In einer weiteren praktischen Ausführungsform einer Tiertransportbox ist das Zugmittel-Fixierelement funktional mit einem Auslöseelement derart gekoppelt, dass die Fixierwirkung durch Betätigung des Auslöseelements aufhebbar ist. Diesbezüglich wird insbesondere auf einen Auslösehebel oder Auslöseknopf verwiesen, dessen Betätigung die Fixierwirkung aufhebt und so ermöglicht, dass sich die Spannung des Zugmittels löst, indem sich das Zugmittel gegen die Zugrichtung durch das Zugmittel-Fixierelement zurückbewegen lässt.

Eine besonders hohe Anwendungssicherheit lässt sich erzielen, wenn bei einer Tiertransportbox ein Auslöseelement-Sicherungselement derart vorgesehen und konstruiert ist, dass die Betätigung des Auslöseelement-Sicherungselements erforderlich ist, um das Auslöseelement wirksam betätigen zu können. Denn in diesem Fall können das Auslöseelement-Sicherungselement und das Auslöseelement so angeordnet werden, dass eine Fehlbedienung durch zufälliges Drücken, Ziehen oder Bewegen des Auslöseelements sicher ausgeschlossen wird. Dies kann beispielsweise derart erfolgen, dass gleichzeitig mit einer Hand ein Element gezogen und das andere gedrückt werden muss. Alternativ oder in Ergänzung können die beiden Elemente, Auslöseelement und Auslöseelement-Sicherungselement, auch so angeordnet werden, dass eine Betätigung mit einer einzigen Hand ausgeschlossen ist, so dass zwei Hände oder eine Hand und ein anderes Körperteil oder zwei andere Körperteile erforderlich sind, um das Auslöseelement wirksam zu betätigen.

Weitere praktische Ausführungsformen und Vorteile der Erfindung sind nachfolgend im Zusammenhang mit den Zeichnungen beschrieben. Es zeigen:
- Fig. 1: eine erste Ausführungsform einer aufgeklappten Tiertransportbox in einer isometrischen Darstellung in einer Ansicht von schräg vorne,
- Fig. 2: die Tiertransportbox aus Figur 1 in einer isometrischen Darstellung in einer Ansicht von schräg hinten
- Fig. 3: die Tiertransportbox aus den Figuren 1 und 2 mit geöffneter Tür,
- Fig. 4: die Tiertransportbox aus den Figuren 1 bis 3 in einer isometrischen Darstellung in einer Seitenansicht ohne Bezug,
- Fig. 5: die Tiertransportbox aus den Figuren 1 bis 4 in einer isometrischen Darstellung in einer Seitenansicht ohne Bezug in der ersten Phase eines Zusammenklappens,
- Fig. 6: die Tiertransportbox aus den Figuren 1 bis 5 in einer isometrischen Darstellung in einer Ansicht von schräg vorne mit geöffneter Tür und ohne Bezug in der ersten Phase eines Zusammenklappens,
- Fig. 7: die Tiertransportbox aus den Figuren 1 bis 6 in einer isometrischen Darstellung in einer Ansicht von schräg vorne mit geöffneter Tür und ohne Bezug in einer zweiten Phase eines Zusammenklappens,
- Fig. 8: die Tiertransportbox aus den Figuren 1 bis 7 in einer isometrischen Darstellung in einer Seitenansicht ohne Bezug in einer dritten Phase eines Zusammenklappens,
- Fig. 9: die Tiertransportbox aus den Figuren 1 bis 8 in einer isometrischen Darstellung in einer Ansicht von schräg vorne mit geöffneter Tür im zusammengeklappten Zustand,
- Fig. 10: die Tiertransportbox aus den Figuren 1 bis 9 in einer isometrischen Darstellung in einer Seitenansicht mit geschlossener Tür und ohne Bezug im zusammengeklappten Zustand,
- Fig. 11: eine isometrische Seitenansicht eines Scharniers mit Gelenkarretierung, das für eine zweite Ausführungsform einer Tiertransportbox geeignet ist,
- Fig. 12: das Scharnier aus Figur 11 in einer isometrischen Darstellung im demontierten Zustand.
- Fig. 13: das Scharnier aus den Figuren 11 und 12 in einer isometrischen Darstellung im demontierten Zustand,
- Fig. 14: eine weitere Ausführungsform einer Tiertransportbox mit verbessertem Gurtspanner in einer isometrischen Darstellung ohne Bezug,
- Fig. 15: einen Ausschnitt der Oberseite der Tiertransportbox aus Figur 14 mit detaillierter Darstellung des Gurtspanners in einer isometrischen Darstellung von schräg oben und
- Fig. 16: einen Ausschnitt der Oberseite der Tiertransportbox aus Figur 14 mit detaillierter Darstellung des Gurtspanners in einer anderen isometrischen Darstellung von schräg oben und von der Seite.

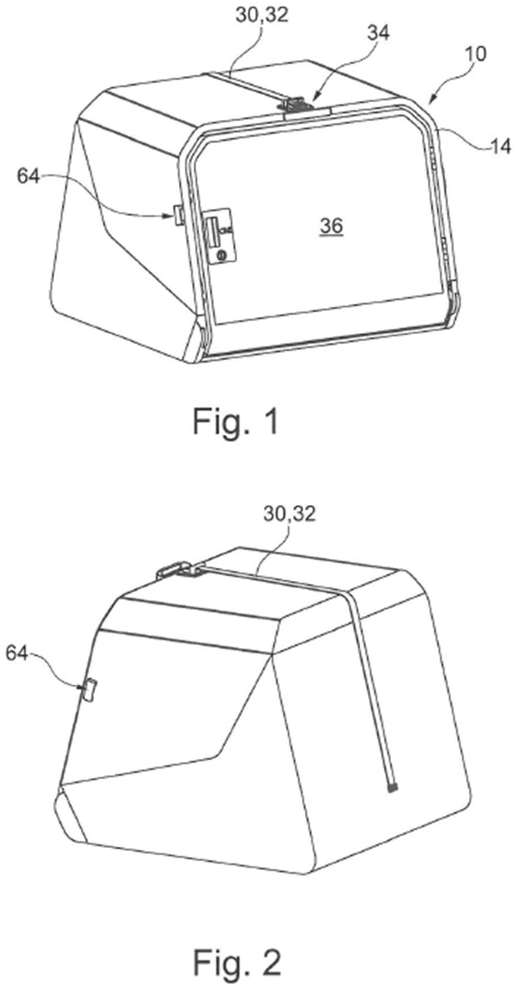

Die Figuren 1 bis 10 zeigen eine beispielhafte Ausführungsform einer zusammenklappbaren Tiertransportbox 10. Diese Tiertransportbox 10 weist ein Bodenelement 12, ein verschwenkbar mit dem Bodenelement 12 verbundenes erstes Rahmenelement 14 und ein verschwenkbar mit dem Bodenelement 12 verbundenes zweites Rahmenelement 16 auf. Dabei sind das erste Rahmenelement 14 und das zweite Rahmenelement 16 auf gegenüberliegenden Seiten des Bodenelements 12 verschwenkbar angeordnet. Ferner ist ein mit dem ersten Rahmenelement 14 und mit dem zweiten Rahmenelement 16 aufspannbarer Bezug 18 vorgesehen. Der Bezug 18 lässt sich durch Aufschwenken des ersten Rahmenelements 14 und des zweiten Rahmenelements 16 derart aufspannen, dass sich zwischen den Rahmenelementen 14, 16 ein Hohlraum zur Aufnahme eines zu transportierenden Tieres (nicht dargestellt) ergibt.

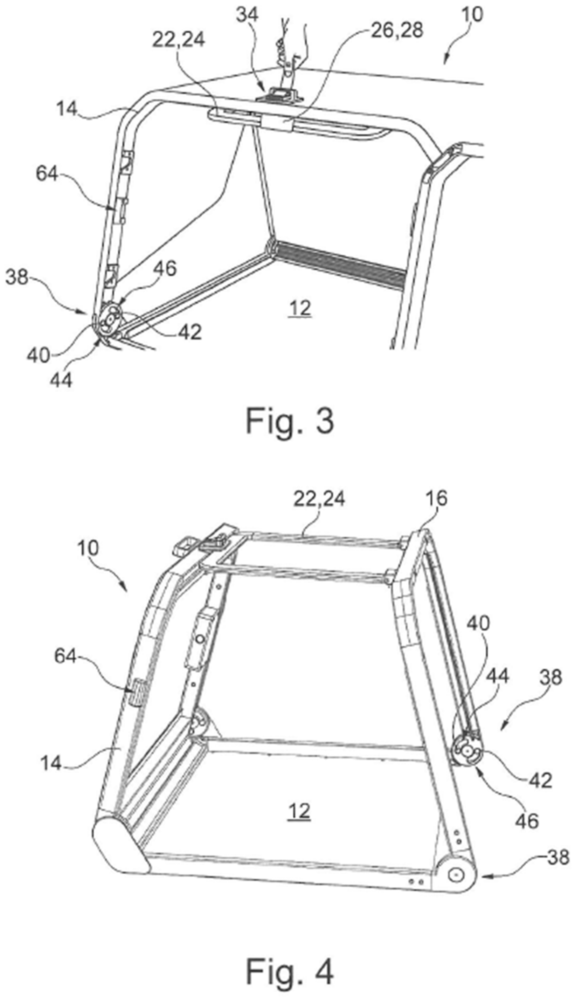

In der in den Figuren 1 bis 10 dargestellten Ausführungsform ist als Bedien-Spannmittel 20 ein an dem zweiten Rahmenelement verschwenkbar angeordnetes Stützelement 22 vorgesehen, das beim Aufschwenken in eine sich zwischen dem ersten Rahmenelement 14 und dem zweiten Rahmenelement 16 erstreckende Stützposition verschwenkbar ist. Als Stützelement 22 dient in der gezeigten Ausführungsform ein U-förmiger Bügel 24. In Figur 4 ist gut erkennbar, wie sich dieser U-förmige Bügel 24 im aufgeklappten Zustand in einer ungefähr horizontalen Ausrichtung befindet und sich an dem ersten Rahmenelement 14 abstützt.

Zum Abstützen ist an dem ersten Rahmenelement 14 ein Widerlagerabschnitt 26 vorgesehen. Dieser ist in den Figuren 3, 6, 7 und 8 gut erkennbar. Der Widerlagerabschnitt 26 ist als ebene Platte 28 ausgeführt und weist damit einen Spannbereich auf, der so ausgebildet ist, dass der U-förmige Bügel 24 am Ende des Verfahrwegs der Aufschwenkbewegung mit Hilfe der Platte 28 eine zunehmende Aufspreizung des ersten Rahmenelements 14 und des zweiten Rahmenelements 16 bewirkt, so dass der dieses Element umgebende Bezug 18 gespannt wird und sich ein entsprechend gestalteter Hohlraum ergibt.

Zum Aufschwenken des zweiten Rahmenelements 16 ist ein Zugmittel 30 in Form eines Gurtes 32 vorgesehen, welcher nicht in allen Figuren dargestellt ist. Dabei ist der Gurt 32 in der gezeigten Ausführungsform durch einen Gurtspanner 34 geführt und nur mittelbar mit dem zweiten Rahmenelement 16 verbunden, denn der Gurt 32 ist unmittelbar mit dem Stützelement 22 verbunden, der in dieser Ausführungsform als der U-förmige Bügel 24 ausgebildet ist.

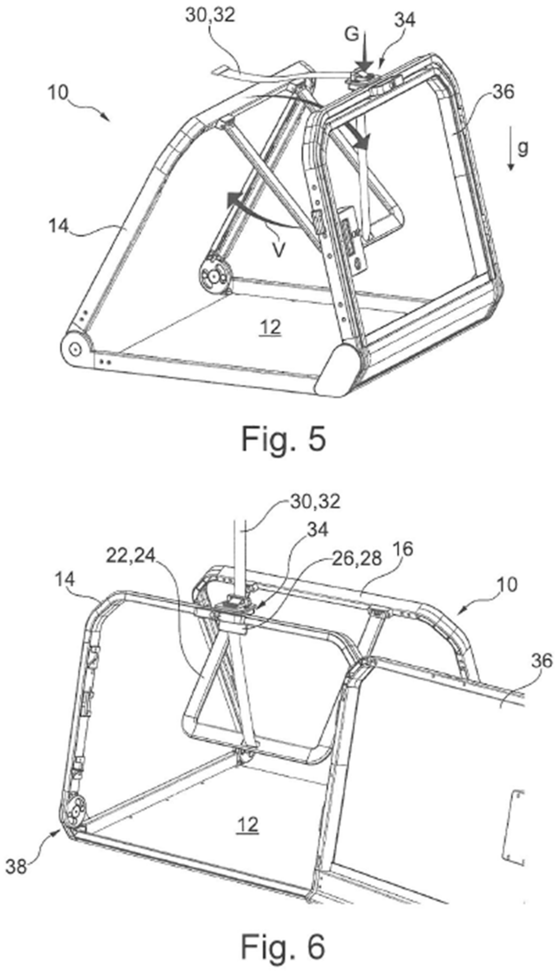

In der gezeigten Ausführungsform ist der U-förmige Bügel 24 mit Hilfe einer geeigneten Feder in die Richtung vorgespannt, in welche der Bügel 24 relativ zu dem zweiten Rahmenelement 24 verschwenkt werden muss, um die Tiertransportbox 10 in den zusammengeklappten Zustand zu bringen. Die Vorspannung der Feder wirkt dementsprechend in die in Figur 5 mit dem Pfeil V gekennzeichnete Richtung.

Wie in den Figuren 1, 6, 7 und 9 gut erkennbar ist, ist an dem ersten Rahmenelement 14 eine verschwenkbar angeordnete Tür 36 vorgesehen. Die Tür 36 ist in der gezeigten Ausführungsform um eine seitliche, vertikale Achse des ersten Rahmenelements 14 verschwenkbar, wie sich aus einer Zusammenschau der genannten Figuren ergibt. Die Tür 36 dient dazu, den von der Tiertransportbox 10 umspannten Hohlraum zum Ein- und Aussteigen von Tieren von der Rückseite eines Kofferraumes eines Kraftfahrzeuges aus zugänglich zu machen, indem die Tür bedarfsweise geöffnet wird.

Im Folgenden wird das Zusammenklappen und das Aufklappen der in den Figuren 1 bis 10 dargestellten Tiertransportbox 10 im Detail beschrieben. Die Figuren 1 bis 4 zeigen verschiedene Ansichten der aufgeklappten Tiertransportbox 10. In diesem Zustand befindet sich der als Stützelement 22 dienende U-förmige Bügel 24 in der Spannposition, wie aus den Figuren 3 und 4 gut ersichtlich ist. Dabei stützt sich das verschwenkbare Ende des Bügels 24 an dem Widerlagerabschnitt 26 des ersten Rahmenelements 14 ab und spannt das erste Rahmenelement 14 und das zweite Rahmenelement 16 jeweils nach außen, so dass der Bezug 18 einen erwünschten, gespannten Zustand aufweist. Der Bezug 18 ist vorzugsweise aus einem robusten Textilmaterial hergestellt.

Zum Zusammenklappen der Tiertransportbox 10 wird, wie in Figur 5 angedeutet, der Gurtspanner 34 gelöst. Dadurch bewegt sich der U-förmige Bügel 24 schwerkraftbedingt (Wirkung der Schwerkraft in Richtung des Pfeils g) nach unten. Die Bewegung wird noch zusätzlich durch die nicht dargestellte Feder unterstützt, welche ein Moment in Richtung des Pfeils V bewirkt. Durch das Verschwenken des U-förmigen Bügels 24 wird auch der daran befestigte Gurt 32 in Richtung des Pfeils g durch den Gurtspanner 34 geführt.

Figur 6 zeigt eine ähnliche Phase des Zusammenklappens der Tiertransportbox 10 wie in Figur 5, allerdings mit geöffneter Tür 36. Das Zusammenklappen ist dementsprechend auch möglich, während die Tür aufgeschwenkt ist.

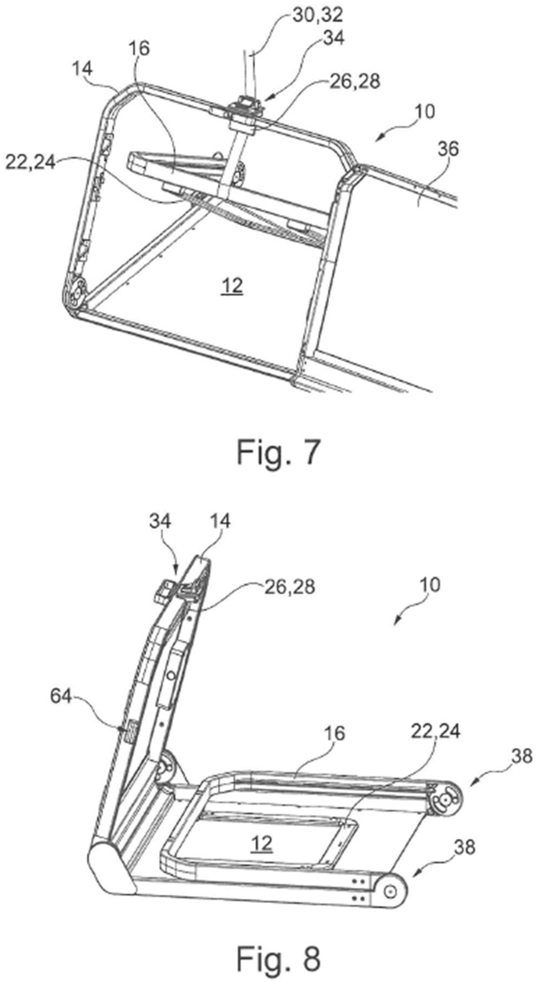

Figur 7 zeigt eine spätere Phase des Zusammenklappens der Tiertransportbox 10. In dieser Phase ist der U-förmige Bügel 24 schon nahezu in die Ebene des zweiten Rahmenelements 16 verschwenkt, was in dieser Ausführungsform durch die Wirkung der Feder in Richtung des Pfeils V bewirkt wird. Ohne eine solche Feder könnte die Klappbewegung des U-förmigen Bügels 24 auch manuell durch einen Benutzer erfolgen. Die Unterstützung durch die Feder hat den Vorteil, dass das Lösen des Gurtes 32 aus der in den Figuren 1 bis 4 gezeigten, gespannten Position ausreichend ist, um ein automatisches Zusammenklappen der Tiertransportbox 10 zu bewirken, ohne dass es eines weiteren Eingriffs durch einen Benutzer bedarf. Dadurch ergibt sich ein hoher Bedienkomfort.

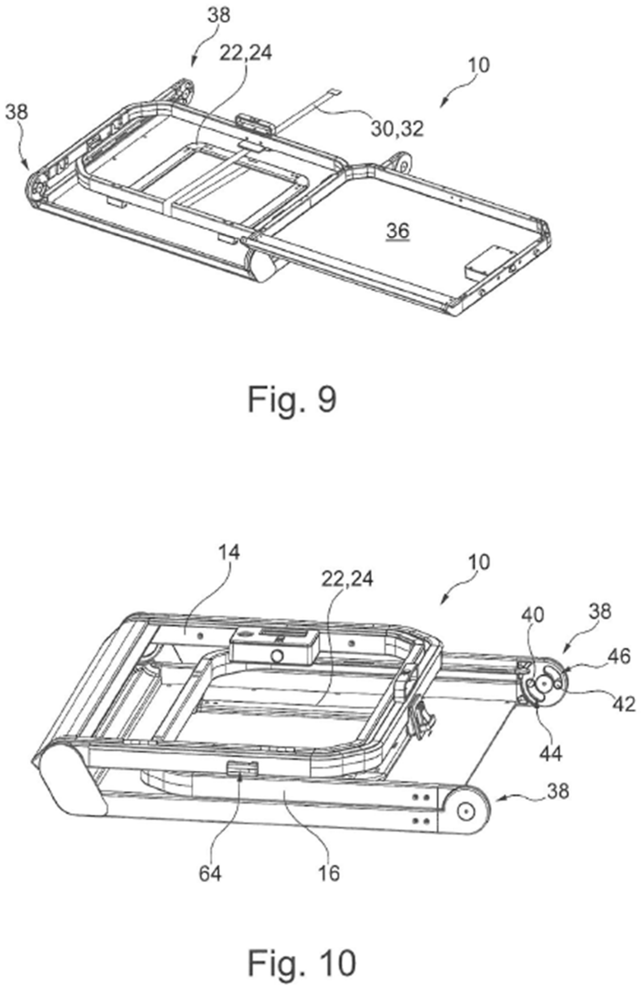

In einer weiteren Phase des Zusammenklappens, die in Figur 8 dargestellt ist, liegt das hintere Rahmenelement 16 in einer Ebene mit dem U-förmigen Bügel 24 auf dem Bodenelement 12 auf. Dementsprechend kann in einem nächsten und letzten Schritt des Zusammenklappens das vordere Rahmenelement 14 nach unten geklappt werden, um die in den Figuren 9 (mit aufgeschwenkter Tür 36) und 10 (mit verschlossener Tür 36) zu erreichen. Das Zusammenklappen des vorderen Rahmenelements 14 erfolgt schwerkraftbedingt, da das vordere Rahmenelement 14, wie auch das hintere Rahmenelement 16, in der aufgeklappten Position nicht senkrecht ausgerichtet sind, sondern in Richtung der jeweils zusammenklappten Position geneigt angeordnet sind. Alternativ oder in Ergänzung dazu können auch auf das erste Rahmenelement 14 und/oder auf das zweite Rahmenelement 16 wirkende Federn oder sonstige Spannelemente vorgesehen sein, um ein Verschwenken in Richtung der geschlossenen Stellung zu unterstützen, welche in den Figuren 9 und 10 dargestellt ist.

Das Aufklappen der Tiertransportbox 10 erfolgt grundsätzlich in umgekehrter Reihenfolge. Dazu muss lediglich der Gurt 32 nach oben gezogen werden. Da der Gurt 32 an dem U-förmigen Bügel 24 befestigt ist, bewirkt das Hochziehen des Gurtes 32, dass mit dem U-förmigen Bügel 24 das zweite Rahmenelement 16 nach oben gezogen wird. Da das zweite Rahmenelement 16 in der zusammengeklappten Stellung der Tiertransportbox 10 auf dem ersten Rahmenelement 14 liegt, wird mit dem zweiten Rahmenelement 16 auch das erste Rahmenelement 14 nach oben geklappt. Durch das resultierende Aufschwenken beider Rahmenelemente 14, 16 wird anschließend eine Stellung der Rahmenelemente 14, 16 erreicht, in welcher das erste Rahmenelement 14 so weit aufgeschwenkt ist, dass sich das zweite Rahmenelement 16 von dem ersten Rahmenelement 14 löst und ohne Kontakt zu dem ersten Rahmenelement 14 weiter nach oben verschwenken kann, was durch weiteres Ziehen an dem Gurt 32 auch passiert. Wie in Figur 6 gut erkennbar ist, übt der Gurt 32 dann eine Zugkraft auf den U-förmigen Bügel 24 aus, die ein Verschwenken des U-förmigen Bügels relativ gegenüber dem zweiten Rahmenelement 16 bewirkt. Die Zugkraft des Gurtes 32 muss dabei ausreichend groß sein, um die Kraft der auf den U-förmigen Bügel 24 wirkenden Feder (nicht dargestellt) zu überwinden. Da der Gurt 32 auch unverlierbar durch den Gurtspanner 34 geführt ist, verbleibt das erste Rahmenelement 14 konstruktiv bedingt stets oberhalb des U-förmigen Bügels 24. Durch weiteres Ziehen an dem Gurt 32 wird der U-förmige Bügel 24 schließlich so weit nach oben verschwenkt, dass das frei verschwenkbare Ende des U-förmigen Bügels 24, an welchem der Gurt 32 befestigt ist, den als Platte 28 ausgebildeten Widerlagerabschnitt 26 berührt. Durch weiteres Ziehen gleitet das frei verschwenkbare Ende an der Platte 28 entlang und spreizt dabei aufgrund der durch die Platte gebildeten Schräge das erste Rahmenelement 14 und das zweite Rahmenelement 16 so auf, dass der Bezug 18 in eine gewünschte Form aufgespannt wird, wie in den Figuren 1 bis 3 gut erkennbar.

Der Gurtspanner 34 ist so konzipiert, dass er den Gurt 32, wenn der losgelassen wird, in der jeweiligen Position gespannt hält, sofern der Gurtspanner 34 in seiner Spannstellung ist. Durch Betätigung des Gurtspanners 34, kann die Spannposition gelöst werden, um den vorstehend bereits beschriebenen Prozess des Zusammenklappens zu bewirken. Dabei ist es möglich, die Spannstellung vollständig durch Betätigung (z.B. Drücken, Ziehen, Drehen) eines Betätigungselements zu lösen und den Gurtspanner 34 so zu konzipieren, dass die Spannstellung nach dem Lösen und Zusammenklappen erneut manuell aktiviert werden muss.

Alternativ kann die Spannstellung immer aktiv sein und nur bedarfsweise durch aktive Betätigung so lange lösbar sein, wie die Betätigung durch einen Benutzer erfolgt. Dann ist die Spannstellung unmittelbar nach dem Betätigen zum Lösen der Spannstellung wieder aktiv.

Ebenfalls möglich ist es, den Gurtspanner 34 so zu konstruieren, dass die Spannstellung bei Betätigung lösbar ist und sich die Spannstellung selbsttätig wieder aktiviert, sobald die Transportbox 10 vollständig zusammengeklappt ist. Dies kann beispielsweise durch eine Betätigungskontur (nicht dargestellt) erfolgen, die im zusammenklappten Zustand der Tiertransportbox 10 derart auf den Gurtspanner 34 wirkt, dass er betätigt und wieder in die Spannstellung gebracht wird. Dadurch ergibt sich ein besonders hoher Bedienkomfort, weil das Zusammenklappen durch einfache Betätigung erfolgen kann und das Aufklappen ohne weitere Bedienschritte durchgeführt werden kann, indem an dem Gurt 32 wie beschrieben gezogen wird, um ihn zu spannen und die Tiertransportbox 10 in die in den Figuren 1-4 aufgeklappte Position zu bringen.

Es wird noch darauf hingewiesen, dass die in den Figuren 1 bis 10 gezeigte Tiertransportbox 10 spezielle Scharniere 38 aufweist, die in den Figuren 3, 6 und 7 gut erkennbar sind. Diese Scharniere 38 dienen zur Verschwenkbarkeit des ersten Rahmenelements 14 und des zweiten Rahmenelements 16 jeweils gegenüber dem Bodenelement 12. Dazu sind jeweils zwei Bolzen 40, 42 in einer kreisbogenförmigen korrespondierenden Nut 44, 46 verfahrbar gelagert. Dabei sind die Bolzen 40, 42 und die Nuten 44, 46 unmittelbar an dem Bodenelement 12 und dem ersten Rahmenelement 14 bzw. unmittelbar an dem Bodenelement 12 und dem zweiten Rahmenelement 16 derart ausgebildet, dass der gewünschte Verschwenkwinkel des jeweiligen Rahmenelements 14, 16 ermöglicht wird. Dementsprechend kann durch die geeignete Ausbildung der Nuten 44, 46 auch ein Anschlag realisiert sein, mit welchem eine oder zwei Endlagen (maximale Aufschwenkposition und zusammengeklappte Position) vorgegeben sind.

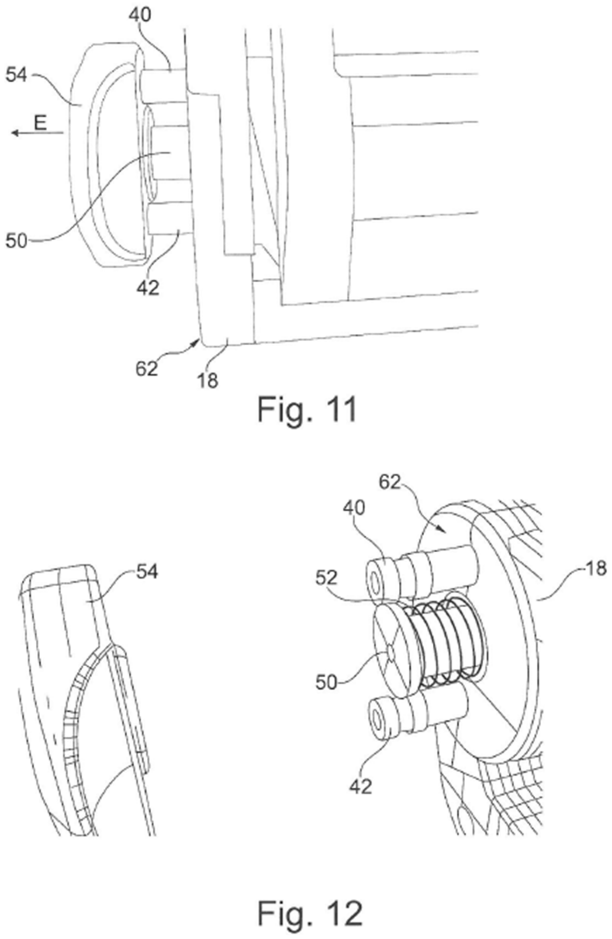

Im Folgenden wird mit Hilfe der Figuren 11 bis 13 noch eine weitere Ausführungsform beschrieben, welche im Wesentlichen der ersten Ausführungsform entspricht. Daher werden im Folgenden für identische oder zumindest funktionsgleiche Elemente die gleichen Bezugszeichen wie in den Figuren 1 bis 10 verwendet.

Die zweite Ausführungsform, welche als Ganzes nicht dargestellt ist, weist ein Bodenelement 12, ein verschwenkbar mit dem Bodenelement 12 verbundenes erstes Rahmenelement 14 und ein verschwenkbar mit dem Bodenelement 12 verbundenes zweites Rahmenelement 16 auf. Dabei sind das erste Rahmenelement 14 und das zweite Rahmenelement 16 auf gegenüberliegenden Seiten des Bodenelements 12 verschwenkbar angeordnet. Ferner ist ein mit dem ersten Rahmenelement 14 und mit dem zweiten Rahmenelement 16 aufspannbarer Bezug 18 vorgesehen. Der Bezug 18 lässt sich durch Aufschwenken des ersten Rahmenelements 14 und des zweiten Rahmenelements 16 derart aufspannen, dass sich zwischen den Rahmenelementen 14, 16 ein Hohlraum zur Aufnahme eines zu transportierenden Tieres (nicht dargestellt) ergibt. Die zweite Ausführungsform unterscheidet sich dadurch, dass als Bedien-Spannmittel 20 eine Gelenkarretierung 48 im verschwenkbar ausgebildeten Bereich sowohl zwischen dem ersten Rahmenelement 14 und dem Bodenelement 12 als auch zwischen dem zweiten Rahmenelement 16 und dem Bodenelement 12 vorgesehen ist, mittels welcher das erste Rahmenelement 14 und das zweite Rahmenelement 16 jeweils in der aufgespannten Position automatisch arretiert werden, sobald die Spannposition beim Aufschwenken erreicht ist. Dadurch kann auf ein Stützelement 22, wie z.B. einen U-förmigen Bügel 24, vollständig verzichtet werden.

Die zusammengeklappte Tiertransportbox 10 der zweiten Ausführungsform sieht im Wesentlichen so aus, wie in Figur 10 dargestellt, wobei der U-förmige Bügel 24 nicht vorgesehen ist. Zum Aufklappen der zweiten Ausführungsform greift ein Benutzer zunächst das erste Rahmenelement 14, insbesondere im Bereich des frei verschwenkbaren Endes, und verschwenkt dieses in die in Figur 4 gezeigte, aufgeklappte Stellung. In dieser Stellung verriegelt die Gelenkarretierung 48 im Verbindungsbereich zwischen dem ersten Rahmenelement 14 und dem Bodenelement 18. Diese Gelenkarretierung 48 wird nachfolgend noch im Detail anhand der Figuren 11 bis 13 erläutert.

Anschließend oder zeitgleich greift der Benutzer das zweite Rahmenelement 16 und verschwenkt dieses ebenfalls nach oben in die in Figur 4 gezeigte Stellung. In dieser Stellung verriegelt die Gelenkarretierung 48 im Verbindungsbereich zwischen dem zweiten Rahmenelement 16 und dem Bodenelement 12. Diese Gelenkarretierung 48 ist baugleich zu der oben genannten Gelenkarretierung 48 und wird nachfolgend im Detail anhand der Figuren 11 bis 13 erläutert.

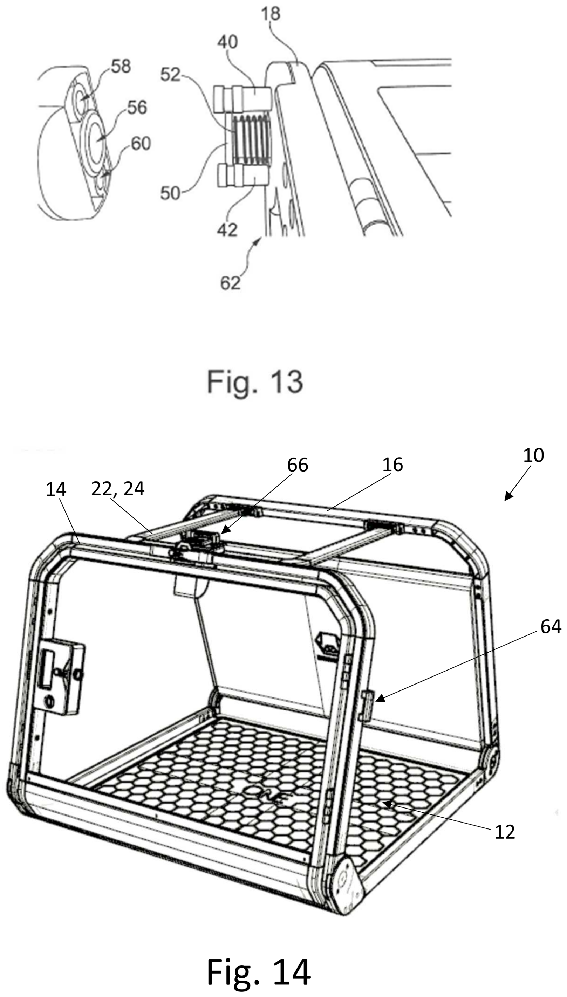

Die wesentlichen Elemente der Gelenkarretierung 48 sind in den Figuren 12 und 13 gut erkennbar. Dies sind zwei Bolzen 40, 42, die so angeordnet und ausgebildet sein können, wie die beiden in Verbindung mit den Figuren 1 bis 10 gezeigten Bolzen und daher mit den gleichen Bezugszeichen versehen sind. Zwischen den Bolzen 40, 42 ist ein Spannelement 50 mit einer Feder 52 angeordnet, das mit einem Verriegelungselement 54 zusammenwirkt. Wie in Figur 13 erkennbar ist, ist in dem Verriegelungselement 54 eine Öffnung 56 für das Verriegelungselement 54 und zwei weitere Öffnungen 58, 60 für die Bolzen 40, 42 ausgebildet. Die Gelenkarretierung 48 funktioniert so, dass die Bolzen 40, 42 in der aufgeklappten Position der Tiertransportbox 10 in die Öffnungen 58, 60 eingreifen, um das erste Rahmenelement 14 bzw. das zweite Rahmenelement 16 jeweils in der aufgeklappten Stellung zu halten. Zum Lösen der Gelenkarretierung 48 muss das Verriegelungselement 54 so betätigt werden, dass die Bolzen 40, 42 außer Eingriff der korrespondierenden Öffnungen 58, 60 geraten, um die Rahmenelemente 14, 16 wieder verschwenken zu können. Die Feder 52 dient dabei als Vorspannelement, um die Bolzen 40, 42 in der verriegelten Position zu halten und ein unbeabsichtigtes Lösen zu vermeiden. Zum Lösen muss die Federkraft der Feder 52 dementsprechend jeweils überwunden werden.

Figur 11 zeigt die Gelenkarretierung 48 im (noch) verriegelten Zustand, in welchem die Bolzen 40, 42 zwar noch im Eingriff in den Öffnungen 58, 60 sind, aber das Verriegelungselement 54 schon durch Ziehen in die Richtung der Pfeils E teilentriegelt ist. Im vollständig verriegelten Zustand liegt das Verriegelungselement 54 vollständig an einer Seitenfläche 62 des Bodenelements 18 an, so dass die Bolzen 40, 42 vollständig in die Öffnungen 58, 60 eingetaucht sind und in der Seitenansicht nicht sichtbar wären.

Der Vollständigkeit halber wird noch darauf verwiesen, dass bei beiden Ausführungsformen seitlich an dem ersten Rahmenelement 14 Gurtösen 64 ausgebildet sind, die es ermöglichen, die Tiertransportbox 10 in einem Kraftfahrzeug, insbesondere im Kofferraum, zu verspannen und zu fixieren.

In den Figuren 14 bis 16 sind verschiedene Ansichten einer weiteren Ausführungsform einer Tiertransportbox 10 gezeigt. Für identische oder zumindest funktionsgleiche Elemente wie in zuvor beschriebenen Figuren werden die gleichen Bezugszeichen verwendet.

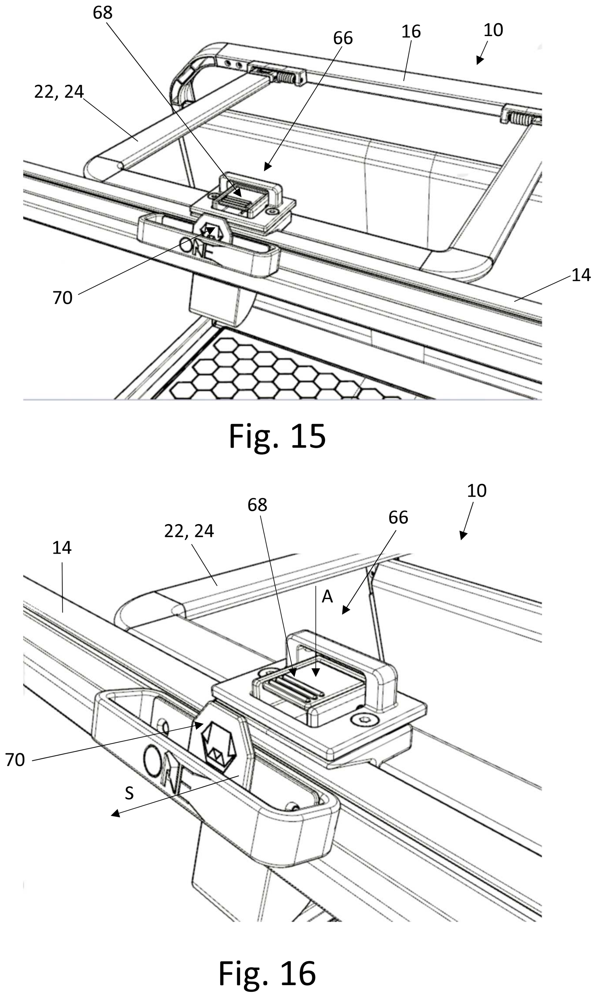

Die in den Figuren 14 bis 16 gezeigte Ausführungsform unterscheidet sich vor allem durch die Gestaltung im Bereich des Stützelements 22 in Form des U-förmigen Bügels 24 und im Bereich des ersten Rahmenelements 14, und zwar jeweils in dem Bereich der genannten Elemente, wo diese aneinander angrenzen. Dort ist ein spezielles Zugmittel-Fixierelement 66 angeordnet, das in den Figuren 15 und 16 im Detail dargestellt ist und nachfolgend in seiner Funktion erläutert wird.

Durch das Zugmittel-Fixierelement 66 ist im Nutzzustand der Tiertransportbox 10 ein Zugmittel 30 geführt, insbesondere ein Gurt 32. Dies ist zwar in den Figuren 14 bis 16 nicht dargestellt, ist aber aus einer Vielzahl der Figuren 1 bis 9 ersichtlich. Dabei weist das Zugmittel-Fixierelement 66 in der gezeigten Ausführungsform ein Auslöseelement 68 auf, das in Richtung des Pfeils A gedrückt werden kann, um es zu betätigen.

Das Zugmittel-Fixierelement 66 ist vorgespannt und weist einen nicht dargestellten Sperrriegel auf, der vorgespannt und derart angeordnet ist, dass beim Hindurchziehen des Zugmittels 30 in Zugrichtung die Spannung des Zugmittels 30 jeweils auf dem erreichten Niveau erhalten bleibt, d.h. das Zugmittel 30 lässt sich weiter in Zugrichtung ziehen, um die Spannung zu erhöhen, jedoch nicht entgegen der Zugrichtung zurückbewegen, um die Spannung des Zugmittels 30 zu verringern. Eine Verringerung der Spannung des Zugmittels 30 kann nur bewirkt werden, indem das Auslöseelement 68 in Richtung des Pfeils A betätigt wird.

Zusätzlich zu dem Auslöseelement 68 ist in der gezeigten Ausführungsform noch ein Auslöseelement-Sicherungselement 70 vorgesehen. Dabei handelt es sich um einen Sicherungsriegel, der in Richtung des Pfeils S verschiebbar ist. Nur wenn das Auslöseelement-Sicherungselement 70 zuvor in Richtung des Pfeils S verschoben wurde, kann das Auslöseelement 68 in Richtung des Pfeils A gedrückt werden, um die Spannung des Zugmittels 30 zu verringern und dadurch die Tiertransportbox 10 zusammenzuklappen. So kann wirksam verhindert werden, dass das Auslöseelement 68 zufällig und/oder versehentlich betätigt wird und die Tiertransportbox 10 unbeabsichtigt zusammengeklappt wird, insbesondere während sich ein Tier in dieser befindet.

Vorzugsweise ist auch das Auslöseelement-Sicherungselement 70 vorgespannt und muss gegen eine Vorspannung in Richtung des Pfeils S betätigt werden. In den Figuren 15 und 16 ist es zwar nicht erkennbar, aber das Auslöseelement-Sicherungselement 70 ist vorzugsweise derart ausgebildet, dass es L-förmig oder U-förmig derart gestaltet ist, dass es derart bis unter das Auslöseelement 68 ragt, dass der hineinragende Abschnitt des Auslöseelement-Sicherungselements 70 als unmittelbare Sperrfläche wirkt. Durch Verfahren in Richtung des Pfeils S kann die Sperrfläche dann so weit seitlich gegenüber dem Auslöseelement 68 verfahren werden, dass sich diese in Richtung des Pfeils A drücken und somit betätigen lässt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Insbesondere wird darauf verwiesen, dass andere konstruktive Gestaltungen von geeigneten Gelenkarretierungen 48 möglich sind und auch Kombinationen aus verschiedenen Bedien-Spannmitteln 20 realisiert werden können.

Ferner sind im Rahmen dieser Anmeldung weiterhin folgende Gegenstände offenbart:

### Abschnitt I.

Zusammenklappbare Tiertransportbox 10 mit einem Bodenelement 12, einem verschwenkbar mit dem Bodenelement 12 verbundenen ersten Rahmenelement 14 und einem verschwenkbar mit dem Bodenelement 12 verbundenen zweiten Rahmenelement 16, wobei das erste Rahmenelement 14 und das zweite Rahmenelement 16 auf gegenüberliegenden Seiten des Bodenelements 12 verschwenkbar angeordnet sind, wobei ferner ein mit dem ersten Rahmenelement 14 und mit dem zweiten Rahmenelement 16 aufspannbarer Bezug 18 vorgesehen ist, der sich durch Aufschwenken des ersten Rahmenelements 14 und des zweiten Rahmenelements 16 derart aufspannen lässt, dass sich zwischen den Rahmenelementen 14, 16 ein Hohlraum zur Aufnahme eines zu transportierenden Tieres ergibt,
dadurch gekennzeichnet,
dass mindestens ein auf das erste Rahmenelement 14 und das zweite Rahmenelement 16 wirkendes Bedien-Spannmittel 20 vorgesehen ist, das gekoppelt an die Bedienung des ersten Rahmenelements 14 und/oder des zweiten Rahmenelements 16 eine Arretierung des ersten Rahmenelements 14 und des zweiten Rahmenelements 16 in einer aufgeschwenkten Spannposition bewirkt.

### Abschnitt 11

Tiertransportbox 10 nach dem vorstehenden Abschnitt I., dadurch
gekennzeichnet, dass als Bedien-Spannmittel 20 ein an dem ersten Rahmenelement 14 und/oder an dem zweiten Rahmenelement 16 verschwenkbar angeordnetes Stützelement 22 vorgesehen ist, das beim Aufschwenken in eine sich zwischen dem ersten Rahmenelement 14 und dem zweiten Rahmenelement 16 erstreckende Stützposition verschwenkbar ist.

### Abschnitt III

Tiertransportbox 10 nach dem unmittelbar vorstehenden Abschnitt, dadurch gekennzeichnet, dass an dem ersten Rahmenelement 14 ein verschwenkbares Stützelement 22 angeordnet ist und an dem zweiten Rahmenelement 16 ein Widerlagerabschnitt 26 für das Stützelement 22 angeordnet ist oder dass an dem zweiten Rahmenelement 16 ein verschwenkbares Stützelement 22 angeordnet ist und an dem ersten Rahmenelement 14 ein Widerlagerabschnitt 26 für das Stützelement 22 angeordnet ist.

### Abschnitt IV

Tiertransportbox 10 nach einem der vorstehenden Abschnitte, dadurch gekennzeichnet, dass zum Aufschwenken des ersten Rahmenelements 14 und/oder des zweiten Rahmenelements 16 ein Zugmittel 30 vorgesehen ist, das unmittelbar oder mittelbar mit dem ersten Rahmenelement 14 oder mit dem zweiten Rahmenelement 16 verbunden ist.

### Abschnitt V

Tiertransportbox 10 nach dem unmittelbar vorstehenden Abschnitt, dadurch gekennzeichnet, dass das Zugmittel 30 an einem verschwenkbaren Stützelement 22 derart angeordnet ist, dass das Stützelement 22 durch einfaches Ziehen an dem Zugmittel 30 in eine sich zwischen dem ersten Rahmenelement 14 und dem zweiten Rahmenelement 16 erstreckende Stützposition bewegbar ist.

### Abschnitt VI

Tiertransportbox 10 nach einem der vier unmittelbar vorstehenden Abschnitte, dadurch gekennzeichnet, dass das Stützelement 22 als U-förmiger Bügel 24, als Platte oder als Gitter ausgebildet ist und/oder das Stützelement 22 und das damit verbundene Rahmenelement 14, 16 vom Bezug 18 entkoppelt sind.

### Abschnitt VII

Tiertransportbox 10 nach einem der fünf unmittelbar vorstehenden Abschnitt, dadurch gekennzeichnet, dass das Stützelement 22 in eine Richtung vorgespannt an dem ersten Rahmenelement 14 und/oder an dem zweiten Rahmenelement 16 angeordnet ist.

### Abschnitt VIII

Tiertransportbox 10 nach einem der vorstehenden Abschnitte, dadurch gekennzeichnet, dass als Bedien-Spannmittel 20 eine Gelenkarretierung 48 im verschwenkbar ausgebildeten Bereich sowohl zwischen dem ersten Rahmenelement 14 und dem Bodenelement 12 als auch zwischen dem zweiten Rahmenelement 16 und dem Bodenelement 12 vorgesehen ist, mittels welcher das erste Rahmenelement 14 und das zweite Rahmenelement 16 jeweils in der aufgespannten Position automatisch arretiert werden, sobald die Spannposition beim Aufschwenken erreicht ist.

### Abschnitt IX

Tiertransportbox 10 nach einem der vorstehenden Abschnitte, dadurch gekennzeichnet, dass in dem ersten Rahmenelement 14 und/oder in dem zweiten Rahmenelement 16 mindestens eine verschwenkbare Tür 36 angeordnet und/oder an dem Bezug 18 mindestens eine bedarfsweise betätigbare Öffnung ausgebildet ist.

### Abschnitt X

Tiertransportbox 10 nach einem der vorstehenden Abschnitte, dadurch gekennzeichnet, dass zur Verschwenkbarkeit des ersten Rahmenelements 14 und/oder zur Verschwenkbarkeit des zweiten Rahmenelements 16 als Scharnier mindestens ein Bolzen 40, 42 in einer kreisbogenförmigen korrespondierenden Nut 44, 46 verfahrbar gelagert ist, wobei der mindestens eine Bolzen 40, 42 und die mindestens eine Nut 44, 46 unmittelbar an dem Bodenelement 12 und dem ersten Rahmenelement 14 bzw. unmittelbar an dem Bodenelement 12 und dem zweiten Rahmenelement 16 ausgebildet sind.

### Abschnitt XI

Tiertransportbox 10 nach einem der Abschnitte IV bis X, dadurch gekennzeichnet, dass als Zugmittel 30 ein Gurt 32 vorgesehen ist.

### Abschnitt XII

Tiertransportbox 10 nach den vorstehenden Abschnitte IV bis XI, dadurch gekennzeichnet, dass das Zugmittel 30 durch ein Zugmittel-Fixierelement 66 geführt ist, mittels welchem eine Fixierwirkung auf das Zugmittel 30 ausübbar ist.

### Abschnitt XIII

Tiertransportbox 10 nach dem vorstehenden Abschnitte, dadurch gekennzeichnet, dass das Zugmittel-Fixierelement 66 mit einer Vorspannung derart beaufschlagt ist, dass die Fixierwirkung aufgrund der Vorspannung ohne das Erfordernis einer separaten Betätigung ausgeübt wird.

### Abschnitt XIV

Tiertransportbox 10 nach einem der beiden unmittelbar vorstehenden Abschnitte, dadurch gekennzeichnet, dass das Zugmittel-Fixierelement 66 funktional mit einem Auslöseelement 68 derart gekoppelt ist, dass die Fixierwirkung durch Betätigung des Auslöseelements 68 aufhebbar ist.

### Abschnitt XV

Tiertransportbox 10 nach einem der vorstehenden Abschnitte, dadurch gekennzeichnet, dass ein Auslöseelement-Sicherungselement 70 derart vorgesehen und konstruiert ist, dass die Betätigung des Auslöseelement-Sicherungselements 70 erforderlich ist, um das Auslöseelement 68 wirksam betätigen zu können.

### Bezugszeichenliste

- 10: Tiertransportbox
- 12: Bodenelement
- 14: erstes Rahmenelement
- 16: zweites Rahmenelement
- 18: Bezug
- 20: Bedien-Spannmittel
- 22: Stützelement
- 24: U-förmiger Bügel
- 26: Widerlagerabschnitt
- 28: Platte
- 30: Zugmittel
- 32: Gurt
- 34: Gurtspanner
- 36: Tür
- 38: Scharnier
- 40: Bolzen
- 42: Bolzen
- 44: Nut
- 46: Nut
- 48: Gelenkarretierung
- 50: Spannelement
- 52: Feder
- 54: Verriegelungselement
- 56: Öffnung
- 58: Öffnung
- 60: Öffnung
- 62: Seitenfläche
- 64: Gurtöse
- 66: Zugmittel-Fixierelement
- 68: Auslöseelement
- 70: Auslöseelement-Sicherungselement
- A: Pfeil
- E: Pfeil
- g: Pfeil
- S: Pfeil
- V: Pfeil

## Patentansprüche

1. Zusammenklappbare Tiertransportbox (10) mit einem Bodenelement (12), einem verschwenkbar mit dem Bodenelement (12) verbundenen ersten Rahmenelement (14) und einem verschwenkbar mit dem Bodenelement (12) verbundenen zweiten Rahmenelement (16), wobei das erste Rahmenelement (14) und das zweite Rahmenelement (16) auf gegenüberliegenden Seiten des Bodenelements (12) verschwenkbar angeordnet sind, wobei ferner ein mit dem ersten Rahmenelement (14) und mit dem zweiten Rahmenelement (16) aufspannbarer Bezug (18) vorgesehen ist, der sich durch Aufschwenken des ersten Rahmenelements (14) und des zweiten Rahmenelements (16) derart aufspannen lässt, dass sich zwischen den Rahmenelementen (14, 16) ein Hohlraum zur Aufnahme eines zu transportierenden Tieres ergibt,
wobei mindestens ein auf das erste Rahmenelement (14) und das zweite Rahmenelement (16) wirkendes Bedien-Spannmittel (20) vorgesehen ist, das gekoppelt an die Bedienung des ersten Rahmenelements (14) und/oder des zweiten Rahmenelements (16) eine Arretierung des ersten Rahmenelements (14) und des zweiten Rahmenelements (16) in einer aufgeschwenkten Spannposition bewirkt, wobei als Bedien-Spannmittel (20) ein an dem ersten Rahmenelement (14) und/oder an dem zweiten Rahmenelement (16) verschwenkbar angeordnetes Stützelement (22) vorgesehen ist, das beim Aufschwenken in eine sich zwischen dem ersten Rahmenelement (14) und dem zweiten Rahmenelement (16) erstreckende Stützposition verschwenkbar ist,
**dadurch gekennzeichnet,**
**dass** das Stützelement (22) in eine Richtung vorgespannt an dem ersten Rahmenelement (14) und/oder an dem zweiten Rahmenelement (16) angeordnet ist.

2. Tiertransportbox (10) nach dem vorstehenden Anspruch, **dadurch gekennzeichnet, dass** an dem ersten Rahmenelement (14) ein verschwenkbares Stützelement (22) angeordnet ist und an dem zweiten Rahmenelement (16) ein Widerlagerabschnitt (26) für das Stützelement (22) angeordnet ist oder dass an dem zweiten Rahmenelement (16) ein verschwenkbares Stützelement (22) angeordnet ist und an dem ersten Rahmenelement (14) ein Widerlagerabschnitt (26) für das Stützelement (22) angeordnet ist.

3. Tiertransportbox (10) nach einem der vorstehenden Ansprüche, **dadurch gekennzeichnet, dass** zum Aufschwenken des ersten Rahmenelements (14) und/oder des zweiten Rahmenelements (16) ein Zugmittel (30) vorgesehen ist, das unmittelbar oder mittelbar mit dem ersten Rahmenelement (14) oder mit dem zweiten Rahmenelement (16) verbunden ist.

4. Tiertransportbox (10) nach dem vorstehenden Anspruch, **dadurch gekennzeichnet, dass** das Zugmittel (30) an einem verschwenkbaren Stützelement (22) derart angeordnet ist, dass das Stützelement (22) durch einfaches Ziehen an dem Zugmittel (30) in eine sich zwischen dem ersten Rahmenelement (14) und dem zweiten Rahmenelement (16) erstreckende Stützposition bewegbar ist.

5. Tiertransportbox (10) nach einem der Ansprüche 2 bis 4, **dadurch gekennzeichnet, dass** das Stützelement (22) als U-förmiger Bügel (24), als Platte oder als Gitter ausgebildet ist und/oder das Stützelement (22) und das damit verbundene Rahmenelement (14, 16) vom Bezug (18) entkoppelt sind.

6. Tiertransportbox (10) nach einem der vorstehenden Ansprüche, **dadurch gekennzeichnet, dass** als Bedien-Spannmittel (20) eine Gelenkarretierung (48) im verschwenkbar ausgebildeten Bereich sowohl zwischen dem ersten Rahmenelement (14) und dem Bodenelement (12) als auch zwischen dem zweiten Rahmenelement (16) und dem Bodenelement (12) vorgesehen ist, mittels welcher das erste Rahmenelement (14) und das zweite Rahmenelement (16) jeweils in der aufgespannten Position automatisch arretiert werden, sobald die Spannposition beim Aufschwenken erreicht ist.

7. Tiertransportbox (10) nach einem der vorstehenden Ansprüche, **dadurch gekennzeichnet, dass** in dem ersten Rahmenelement (14) und/oder in dem zweiten Rahmenelement (16) mindestens eine verschwenkbare Tür (36) angeordnet und/oder an dem Bezug (18) mindestens eine bedarfsweise betätigbare Öffnung ausgebildet ist.

8. Tiertransportbox (10) nach einem der vorstehenden Ansprüche, **dadurch gekennzeichnet, dass** zur Verschwenkbarkeit des ersten Rahmenelements (14) und/oder zur Verschwenkbarkeit des zweiten Rahmenelements (16) als Scharnier mindestens ein Bolzen (40, 42) in einer kreisbogenförmigen korrespondierenden Nut (44, 46) verfahrbar gelagert ist, wobei der mindestens eine Bolzen (40, 42) und die mindestens eine Nut (44, 46) unmittelbar an dem Bodenelement (12) und dem ersten Rahmenelement (14) bzw. unmittelbar an dem Bodenelement (12) und dem zweiten Rahmenelement (16) ausgebildet sind.

9. Tiertransportbox (10) nach einem der Ansprüche 4 bis 8, **dadurch gekennzeichnet, dass** als Zugmittel (30) ein Gurt (32) vorgesehen ist.

10. Tiertransportbox (10) nach den vorstehenden Ansprüchen 4 bis 9, **dadurch gekennzeichnet, dass** das Zugmittel (30) durch ein Zugmittel-Fixierelement (66) geführt ist, mittels welchem eine Fixierwirkung auf das Zugmittel (30) ausübbar ist.

11. Tiertransportbox (10) nach dem vorstehenden Anspruch, **dadurch gekennzeichnet, dass** das Zugmittel-Fixierelement (66) mit einer Vorspannung derart beaufschlagt ist, dass die Fixierwirkung aufgrund der Vorspannung ohne das Erfordernis einer separaten Betätigung ausgeübt wird.

12. Tiertransportbox (10) nach einem der beiden vorstehenden Ansprüche, **dadurch gekennzeichnet, dass** das Zugmittel-Fixierelement (66) funktional mit einem Auslöseelement (68) derart gekoppelt ist, dass die Fixierwirkung durch Betätigung des Auslöseelements (68) aufhebbar ist.

13. Tiertransportbox (10) nach einem der vorstehenden Ansprüche, **dadurch gekennzeichnet, dass** ein Auslöseelement-Sicherungselement (70) derart vorgesehen und konstruiert ist, dass die Betätigung des Auslöseelement-Sicherungselements (70) erforderlich ist, um das Auslöseelement (68) wirksam betätigen zu können.
